# EUROPEAN PATENT APPLICATION

(11) **EP 2 381 350 A1**
(43) Date of publication of application: **26.10.2011**
(21) Application number: 11005008.5
(22) Date of filing: 21.03.2007
(51) Int. Cl.: G06F 3/048

(54) **Mobile communication terminal and information display method thereof**

(30) Priority: 21.03.2006 KR 20060025759
(62) Divisional of application: 07005851.6
(71) Applicant: LG ELECTRONICS INC., Yeoungdeungpo-gu Seoul 150-721 (KR)
(72) Inventor: Kim, Hyun Ho, Seoul (KR); Kim, Yung Hee, Gyeonggi-do (KR)
(74) Representative: Gunzelmann, Rainer

(57) **Abstract**

A mobile communication terminal and an information display method thereof are disclosed. The information display method comprises displaying information on a display unit of the mobile terminal, generating a scrolling start signal and scrolling the information with a positive acceleration based on the generated scrolling start signal.

## Description

### BRIEF DESCRIPTION OF THE DRAWING

FIG. 1 is a control block diagram of a mobile communication terminal according to the present invention,
FIG. 2 is a scrolling operation state diagram according to the present invention,
FIG. 3 is a display state diagram of a schedule control display window that the scrolling function according to the present invention is applied to,
FIG. 4 is a graph of the transferring speed of a scrolling device in FIG. 3,
FIGS. 5 and 6 are display state diagrams of scrolling pictures on the schedule control display window that the scrolling function according the present invention is applied to.

### <Referential Numerals for Principle Parts of the Drawings>

| | |
|---|---|
| 1: RF MODULE | 3: AUDIO PROCESSING UNIT |
| 5: CONTROL UNIT | 7: DISPLAY UNIT |
| 9: USER DATA ENTRY UNIT | 12: MEMORY UNIT |
| 14: SCHEDULE CONTROL PROGRAM | |
| 16: USER SCHEDULE INFORMATION | |
| 18: SCROLLING PROGRAM | 20: SCROLL BAR |
| 22: SCROLL LINE | 30: TIME SCROLL BAR |
| 32: TIME SCROLL LINE | 35: SCHEDULE VIEW WINDOW |
| 37: FIRST TIME LINE | 39: SCEHDULE DIRECTOR |
| 40: PICTURE SCROLL BAR | 41: SECOND TIME LINE |
| 43: MENU | |
| 50a, 50b: SCHEDULE INFORMATION PICTURE | |

### DETAILED DESCRIPTION OF THE PRESENT INVENTION

### [Field of the invention and the Description of the Conventional Art]

The present invention relates to a mobile communication terminal and information display method thereof.

Nowadays, mobile communication terminals are supplying various data through high-definition pictures as the displaying function for processing of data of multimedia. The mobile communication terminals have limits to secure displaying spaces, as they are designed smaller for the convenience of carrying and moving.

Therefore, the mobile communication terminals supplying scrolling function to supply data such as texts of desirable size and images through the limited screen. The scrolling function is moving the data displayed on the picture in the upper, lower, left and right direction, or is moving the letters in the picture in the upper or lower direction to see the parts not displayed on the screen, and it lets the parts which is not displayed in a screen be checked.

When the direction key or the side key set as scrolling key is selected in a mobile communication terminal with the scrolling function, the present picture is scrolled with a predetermined distance, and the desirable picture range is checked, as continuing the scrolling operation as sequentially selecting the scrolling key or pressurizing the scrolling key for a long time.

The conventional mobile communication terminal, however, has some disadvantages in that the comfortableness of use isn't smooth and the productivity of the scrolling picture is low, as the picture is moved discontinuously, since the picture is scrolled per a predetermined distance when the scrolling distance is long.

Further, the conventional mobile communication terminal has some disadvantages in that the user has to control the scrolling speed as controlling the selecting movement of the scrolling key faster or slower, as any special speed controlling function is not supported, therefore, the number of operation times is increased and a lot of time is required when a long distance is scrolled.

### [TECHNICAL PROBLEMS]

The present invention is directed to overcome the above-mentioned disadvantages, and an object of the present invention is to provide a mobile communication terminal and the information display method thereof capable of supplying natural picture and scrolling to the desirable picture range rapidly, as controlling the scrolling speed variously in the scrolling section.

### [COMPOSITION OF THE INVENTION]

An information display method according to the present invention to achieve the above-mentioned object comprises displaying information on a display unit of the mobile terminal; generating a scrolling start signal; and scrolling the information with a positive acceleration based on the generated scrolling start signal.

According to another field of the present invention, it is possible that the above-mentioned object is achieved through an information display method comprising scrolling information on a display unit of the mobile terminal; and terminating the scrolling step with a negative acceleration.

According to another field of the present invention, it is possible that the above-mentioned object is achieved through a mobile communication terminal comprising: a display unit displaying a predetermined information on the picture; an input unit receiving the scrolling order signal; and a control unit scrolling the picture to a predetermined final point as changing the scrolling speed in accordance with the received scrolling signal.

According to another field of the present invention, it is possible that the above-mentioned object is achieved through a mobile communication terminal comprising: a display unit; an input unit receiving the scrolling order signal; and a control unit displaying the first item on the display unit, and changing the picture of the display unit into the picture displaying the second item close to the first item as scrolling in accordance with the received scrolling order signal, wherein the control unit performs the scrolling as changing the scrolling speed, and the first and the second item are included in the same item list.

Reference will now be made in detail hereinafter as for the mobile communication terminal and the information display method according to the preferred embodiment of the present invention with reference to the accompanying drawings.

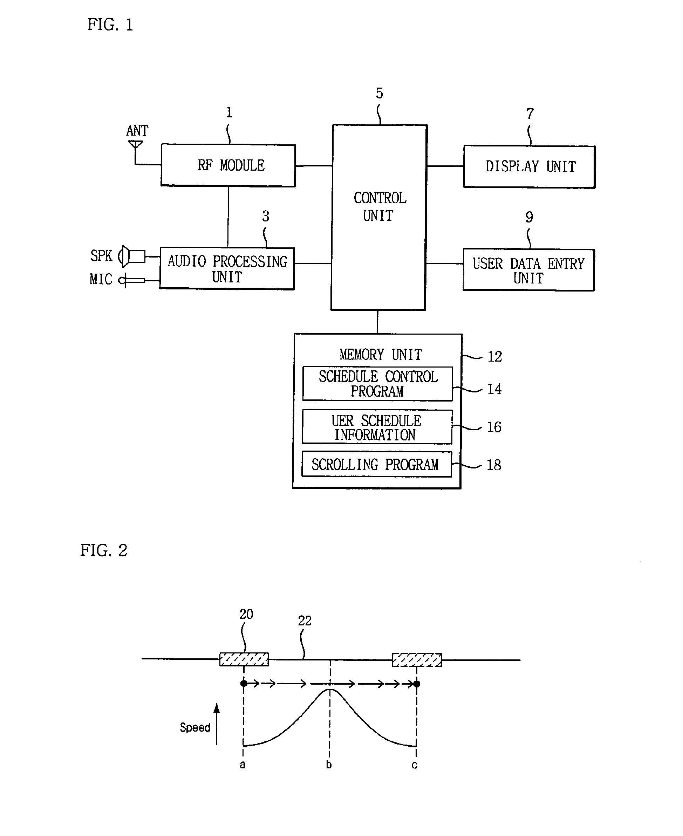

FIG. 1 is a control block diagram of a mobile communication terminal according to the present invention. As illustrated in FIG. 1, the present mobile communication terminal comprises a RF module 1 for radio sending and receiving, an audio processing unit 3 processing the audio signals inpu and output through a microphone MIC and speaker SPK, a user entry unit 9 capable of selecting scrolling function, a display unit 7, a memory unit 12 saving the user information and programs for controlling the terminal, and a control unit 5 displaying predetermined data on the display unit 7 and controlling the data scrolling speed displayed on the display unit 7 in accordance with the selection of the scrolling start and finish input in the user entry unit 9.

The display unit 7 displays the picture that a text or an image is scrolled in the upper, lower, left and right direction as displaying graphic data output by the control unit 5 on the picture when the control unit 5 practices the scroll function.

The user entry unit 9 includes various input devices for inputting numbers and text information or for controlling the functions. User entry units 9 are key inputting means such as keypads, direction key, side key and etc, sensor device for user entry such as touching sensor, distance sensor, terrestrial magnetism sensor and etc, and a touch panel equipped an the display unit 7 and etc. Some of the user entry units 9 such as the direction key, side key, sensor device, the scroll bar displayed at the touch panel and etc can be selected by a user in accordance with the requirements of the user, since they are set as the scrolling keys for the selection of the scrolling function. Here, it is possible for the scrolling key to be set as a plurality of keys for the selection of the functions of the scrolling start/ stop/ acceleration/ retardation and etc, or it is possible that one user entry 9 is used, but a plurality of functions can be selected in accordance with the input methods such as the number of input times, input order and etc. For instance, it is possible to increase the scrolling speed as the volume of the input pressure becomes larger, and when the pressure sensor is set as a scrolling key, and to increase the scrolling speed when the scrolling keys are selected sequentially and rapidly when the scrolling key is a touch sensor.

The memory unit 12 stores the user data input by a user and the control data for controlling of the function of the terminal. The user data includes the data stored by a user for using the functions of the mobile communication terminal such as photo data, phone book data, user schedule information 16. Further, the control data includes various control programs for controlling the functions of the mobile communication terminal, schedule control program 14 for controlling the programs for supplying the extra functions such as the user schedule information 16, and the scrolling program 18 for supplying the scrolling function according to the present invention.

The user schedule information 16 includes the schedule such as appointments, business plan and etc input by a user, and related information of the date, time, place and etc of the corresponding schedule.

The schedule control program 14 supplies the input and output interface of the user schedule information 16, and controls the user schedule information 16 entered by a user. For instance, an input window for inputting of the schedule information 16 and a display window to check the entered information are supplied, and the schedule control function is supplied as performing the reminder function on the date that the user schedule information 16 is input.

It is possible that a program based on the flashes is used for the scrolling program 18. Flash is, as copyrighted software developed by Macromedia, used for making animation pictures based on vectors accompanying simple interaction, and it is useful for controlling input and output of mobile phones, as the speed of the picture treatment is fast, the graphic expression is smooth and the capacity is not large. Therefore, it is possible for the scrolling program 18 to generate graphic data that the scrolling speed is controlled variously in accordance with the scrolling input of a user and to supply it to the display unit 7 as performing the graphic data controlling function according to the user input.

The control unit 5 controls the performances of the entire functions of a mobile communication terminal such as phone book function, schedule function, memo function, album function and etc as based on the controlling data stored in the memory unit 12, and let texts and images be displayed on the screen as supplying the graphic data generated from the afore-mentioned control to the display unit 7.

Further, the control unit 5 controls the picture displayed on the display unit 7 to be scrolled in the upper, lower, left and right direction in accordance with the selection of the scrolling function of a user through the user entry unit 9, and it starts scrolling and increases speed slowly when the scrolling start signal is input, and it controls the scrolling to be stop at the final part as decreasing the scrolling speed slowly after converting the final part of the scrolling section when the scrolling stop signal is input.

Here, when the corresponding signals are input from the scrolling key that the scrolling acceleration / retardation function is set on, the control unit controls the scrolling speed variously, for instance, it is possible for the control unit to increase the scrolling speed when the pressure input through the pressure sensor is increased or when the continual input through the touch sensor is perceived. The scrolling function controlling process of the control unit 5 as above can be embodied through the scrolling program 18.

FIG. 2 is a scrolling operation state diagram according to the present invention.

A scroll line 22 and a scroll bar 20 for displaying the scrolling condition are displayed on the display unit 7 when the graphic data to be displayed on the screen is bigger than the size of the screen. The scroll line 22 indicates the length of length and breadth of the whole graphic data, and the location of the scroll bar 20 indicates the location of the graphic data displayed currently against the length of the whole graphic data. Here, it is possible to know that the end part of the graphic data is displayed when the scroll bar is reached to the end of the scroll line 22, and that the there is the graphic data out of the picture display range when the scroll bar 20 is displayed on the middle section of the scroll line 22.

Here, when a user selects the scrolling function through the user entry unit 9, the control unit 5 recognizes that the scrolling start is selected, and starts to scroll the picture after deciding the picture displayed currently to be the starting point a, and increases the scrolling speed slowly. At this time, the control unit 5 allows the user to check the scrolling condition as moving the scroll bar 20 on the scroll line 22 with the same speed of the scrolling speed of the picture.

When a user select the scroll stopping function while scrolling the picture at the picture that the user wanting to check, the control unit 5 stops scrolling at the final part c as decreasing the scrolling speed slowly after converting the final part.

That is, the picture of the scrolling final part c is displayed, as illustrated on the scrolling speed graph illustrated in FIG. 2, the scrolling speed is increased slowly from the scrolling start part a and decreased as closer to the scrolling final part c. As above, natural images are supplied as the scrolling speed during the start and finish of the scrolling is changed slowly.

Further, the convenience for image searching is supplied as the picture section unnecessary to check is scrolled rapidly and as the scrolling speed is decelerated at the picture that the user wants to check.

Therefore, it is easy to search the photo data, phone book data, schedule data and etc during the visual searching.

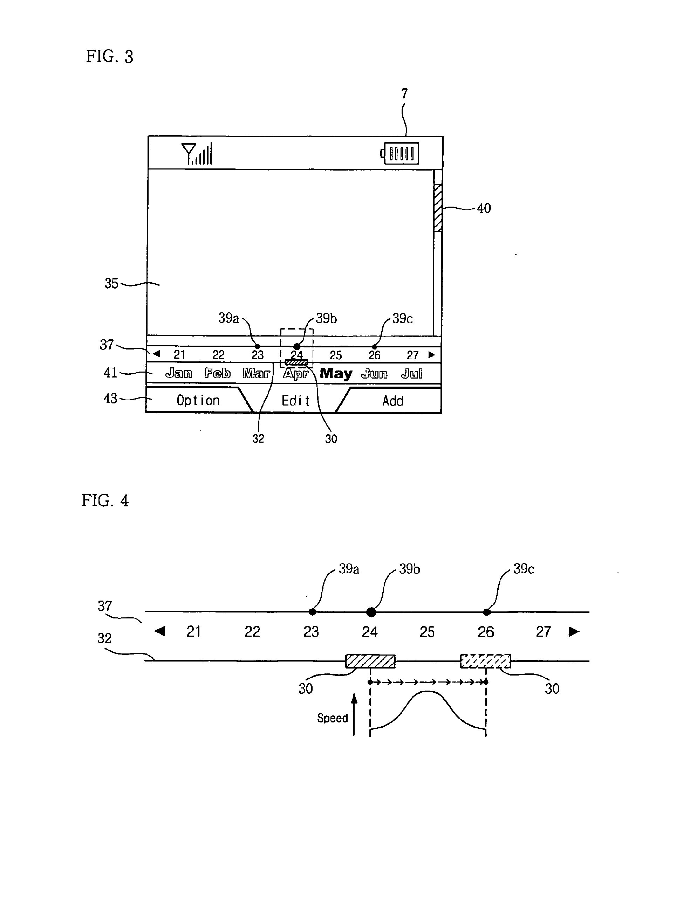

FIG. 3 is a display state diagram of a schedule control display window that the scrolling function according to the present invention is applied to. The schedule control display window displays the user schedule information 16 on the display unit 7 and scrolls the picture that the user schedule information 16 is displayed on in accordance with the scrolling input of a user as based on the scrolling program 18.

As illustrated in FIG. 3, the schedule control display window supplied by the schedule control program 14 is composed of a schedule view window 35 displaying predetermined information, a first time line 37 and a second time line 41, a time scroll bar 30 and a time scroll line 32 displaying the date of the currently displayed schedule and displaying the scrolling condition of the schedule view window 35, and menus 43 supplied from the schedule controlling function.

Here, it is possible for a user to input the schedule information through the add function supplied through the menu 43, or to edit the schedule information input through the edit function, and to set the environment such as selecting the color of the schedule view window 35, the displaying condition and etc as using the optional functions.

The user schedule information such as events, appointments, location and etc input by the user are displayed on the schedule view window 35, and it is also possible that a predetermined graphics and photos registered by the user are displayed at the same time.

Schedule information picture per day is displayed on the schedule view window 35 as user schedule information 16 is input per day. The breadth size of the user schedule information picture is fixed, and the information exceeding the breadth size is displayed as stated on the next line. Here, it is possible to check the part not displayed on the schedule view window 35, as a picture scroll bar 40 is supplied on the schedule view window 35 when the schedule information picture per day is bigger than the schedule view window 35.

The first time line 37 for checking dates displays day, the second time line 41 displays month, and the time scroll bar 30 displays the corresponding date of the schedule information picture currently displayed on the schedule view window 35 as lying between the first time line 37 and the second time line 41 and pointing the predetermined day of the date on the first time line 37.

The time scroll line 32 and the time scroll bar 30 are displayed under the first time line 37 displaying day of the date, and the time scroll par 30 indicates the day of the date on the first time line 37. Here, the scrolling condition of the schedule view window 35 and the corresponding date of the schedule information picture displayed currently are indicated as it is connected with the first time line 37 scrolled in accordance with the selection of the scrolling function of a user through the user entry unit 9.

The first time line 37 indicates the scrolling direction to move to the past or future of the currently displayed date as arranging the dates in order from left to right and arrows are supplied on the both ends. Here, the first time line 37 in FIG. 3 displays the date from 21st and 27th, the first time line displays the date after 27th as it is moved to the left when a user scrolls the time scroll bar 30 in a right direction, and the first time line 37 displays the date before 21st as scrolled in a right direction when a user select the scrolling in a left direction. It also is possible for the first time line 37 as above to display the dates having input schedule information through the schedule director 30a, 30b and 30c. Here, the first time line 37 in FIG. 3 indicates that the schedule information is input on the corresponding date as displaying each of the schedule directors 30a, 30b and 30c on each of the dates 23rd, 24th and 26th. The first time line 37 lets the schedule of the past and the future be checked with the present day as a standard as displaying the present day on the center when the schedule controlling function is started.

The second time line 41 displays the continued month, and the corresponding month of the schedule information picture currently displayed on the schedule view window 35 is indicated to be divided from other months, such as high-lighted or magnified and etc. here, the second time line 41 in FIG. 3 indicates that the schedule information picture of May is displayed. The second time line 41 displays the next month as highlighting, as the day of the first time line 37 is scrolled to the next month.

FIG. 4 is a graph of the transferring speed of a scrolling device, and it shows the scrolling condition of the schedule view window 35.

It is possible for a user to select the scrolling function through the user entry unit 9 to check the schedule information of the date the user wants to. When the direction key or a side key is set as scrolling key, the user can select the scrolling function as selecting left/right key or up/down key, and can select the scrolling function as selecting and dragging the time scroll bar 30 displayed on the display unit 7 in the desirable direction when the touch panel is equipped.

The time scroll bar 30 points a predetermined date of the first time line 37 as scrolled in the direction selected by the user when the scrolling key is selected, and the schedule information picture of the date that the time scroll bar 30 points out is displayed on the schedule view window 35. Here, the scrolling speed of the scrolled time scroll bar 30 is increased slowly and the scrolling speed of the scroll bar is decreased slowly and finally stops scrolling when it is closer to the scrolling stop part, and the schedule information picture of the schedule view window 35 also displays the schedule information picture of the corresponding date as scrolled in the upper, lower, left or right direction as connected with the movement of the time scroll bar 30.

Fir instance, as illustrated in FIG. 4, if the right direction scrolling is selected while checking the schedule of the day of 24th, the time scroll bar 30 starts to move and the speed is increased slowly. Here, when the scrolling stop is selected at the day of 26^{th} on which a schedule director 39c is indicated, the time scroll bar 30 stops as the speed is slowly decreased at the location points the day of 26^{th}. Further, when a user selects the scrolling acceleration during the scrolling with a predetermined speed, the time scroll bar 30 is scrolled faster than before.

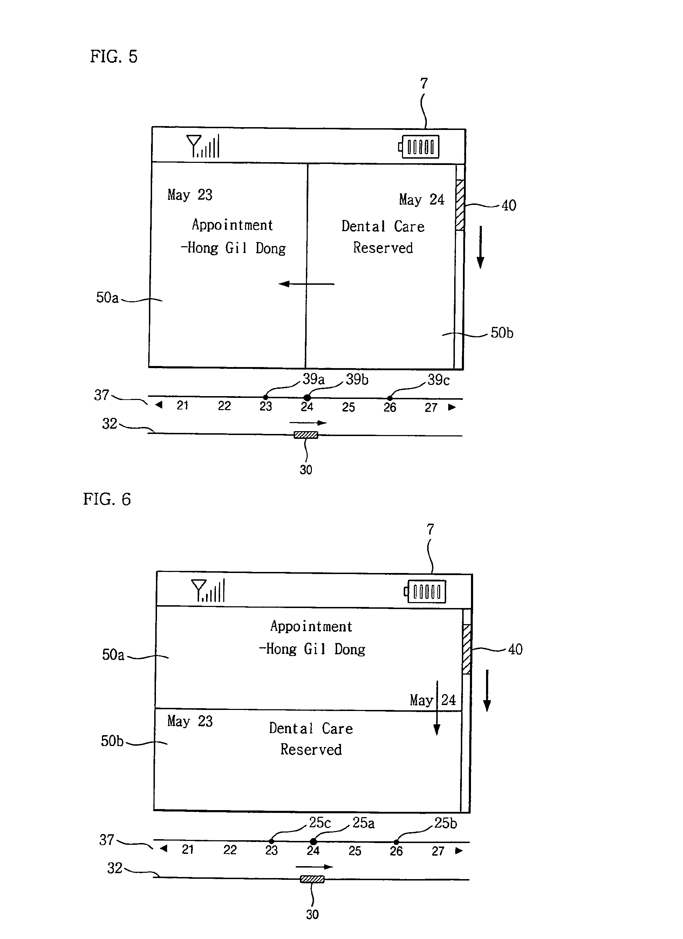

FIGS. 5 and 6 are display state diagrams of scrolling pictures on the schedule control display window that the scrolling function according the present invention is applied to and, more particularly, FIG. 5 is illustrating the case that the schedule information picture is scrolled in the left and right direction, and FIG. 6 is illustrating the case that the schedule information picture is scrolled in the upper and lower direction. The schedule information picture of the user of the date pointed by the time scroll bar 30 is displayed. The schedule information picture is displayed per day, and the schedule information picture is scrolled in the upper or lower direction as FIG. 5 or is scrolled in the left or right direction as FIG. 6 as connected with the scrolling movement of the time scroll bar 30.

For instance, as illustrated in FIG. 5 and 6, the time scroll bar starts to be scrolled at the day of 23^{rd} that the schedule director is indicated, the schedule information picture 50b of the day of 24th starts to be displayed as the schedule information picture 50a of the day 23^{rd} displayed on the schedule view window 35 also starts to be scrolled. Here, the schedule view window 35 is also scrolled rapidly as the scrolling speed of the time scroll bar 30 is increased slowly, and the schedule information picture of the date selected by the user is displayed as the scrolling speed of the time scroll bar 30 and the schedule information picture is decreased slowly when the user selects the scrolling stop at the date that the user wants to check.

Therefore, when the intervals between the dates of the schedule information picture that the user wants to check is large, the schedule information pictures unnecessary to check are scrolled rapidly. Here, it is possible for a user to accelerate the scrolling speed as pressurizing the pressure sensor with higher pressure or selecting the touch sensor continuously. On one hand, the picture becomes natural as the scrolling is stopped at the schedule information picture to check as the scrolling speed of the schedule information picture is decreased slowly when it is closer to the date to check.

The case that the information display method of the present invention is applied to the schedule information function is illustrated in the above-mentioned description, however, it is possible that the information display method of the present invention is applied to all of the scrolling functions used for the mobile communication terminal, such as searching photos as scrolling the photo picture of the photo data stored in the album or searching phone book information stored in the phone book as scrolling and etc. Further, the preferred embodiment according to the present invention is not limited to the above-mentioned description, and possible to be changed variously in the obvious range by a person who has regular knowledge related to the present invention.

### [EFFECTIVE ADVANTAGES]

The mobile communication terminal and the information display method thereof according the present invention as described above controls the scrolling speed variously in the scrolling section.

Therefore, natural pictures are supplied, as the movement of the picture according to the scrolling movement is performed continuously, and it is possible to scroll the picture rapidly to the picture range that the user wants to check.

## Claims

1. A mobile communication terminal comprising:
a display unit (7) configured to display user schedule information (16), a first time line (37), a second time line (41), a scroll bar (30) and a scroll line (32) thereon,
wherein the first time line (37) displays a plurality of dates and the second time line (41) displays a plurality of months,
and wherein the scroll line (32) indicates a length of the whole user schedule information (16) and the scroll bar (30) indicates a location of the displayed user schedule information (16) on the length of the whole user schedule information (16);
a touch panel configured to receive a scrolling start signal and a scrolling stop signal, the scrolling start signal and the scrolling stop signal being directly input on the touch panel; and
a control unit (5) configured to:
scroll the scroll bar (30) and the user schedule information (16) corresponding to the scrolling start signal, wherein a speed of the scrolling the scroll bar (30) and the user schedule information (16) being gradually increased, and
stop the scrolling the scroll bar (30) and the user schedule information (16) corresponding to the scrolling stop signal, wherein the speed of the scrolling the scroll bar (30) and the user schedule information (16) being gradually decreased.

2. The mobile communication terminal of claim 1, wherein the scroll bar (30) points out a specific date among the plurality of dates, wherein the specific date corresponds to the displayed user schedule information (16) on the display unit (7).

3. The mobile communication terminal of claim 2, wherein the control unit (5) is further configured to display a plurality of schedule director (39a, 39b, 39c) on the first time line (37), wherein the plurality of schedule director (39a, 39b, 39c) represent individual schedule items.

4. The mobile communication terminal of claim 3, wherein the touch panel includes a pressure sensor, and wherein the control unit (5) is further configured to control the scrolling speed variably according to a pressure change of a user input being input through the touch panel.

5. The mobile communication terminal of claim 3, wherein the control unit (5) is further configured to control the scrolling speed variably according to at least one of a strength, a moving distance and a duration of the scrolling start signal.

6. The mobile communication terminal of claim 3, wherein the touch panel generates the scrolling start signal and the scrolling stop signal according to a touch and drag gesture input on the scroll bar (30) displayed on the display unit (7), and
wherein the control unit (5) is configured to:
scroll the scroll bar (30) corresponding to the scrolling start signal,
scroll the user schedule information (16) corresponding to the scrolling the scrolling bar (30),
stop the scrolling the scroll bar (30) corresponding to the scrolling stop signal, and
stop the scrolling the user schedule information (16) corresponding to the stopping of the scrolling the scroll bar (30).

7. A method of displaying user schedule information in a mobile communication terminal including a display unit (7) and a touch panel, the method comprising:
displaying user schedule information (16), a first time line (37), a second time line (41), a scroll bar (30) and a scroll line (32) on the display unit (7), wherein the first time line (37) displays a plurality of dates and the second time line (41) displays a plurality of months, and wherein the scroll line (32) indicates a length of the whole user schedule information (16) and the scroll bar (30) indicates a location of the displayed user schedule information (16) on the length of the whole user schedule information (16);
receiving a scrolling start signal and a scrolling stop signal, the scrolling start signal and the scrolling stop signal being directly input on the touch panel;
scrolling the scroll bar (30) and the user schedule information (16) corresponding to the scrolling start signal, wherein a speed of the scrolling the scroll bar (30) and the user schedule information (16) being gradually increased; and
stopping the scrolling the scroll bar (30) and the user schedule information (16) corresponding to the scrolling stop signal, wherein the speed of the scrolling the scroll bar (30) and the user schedule information (16) being gradually decreased.

8. The method of claim 7, wherein the scroll bar (30) points out a specific date among the plurality of dates, wherein the specific date corresponds to the displayed user schedule information (16) on the display unit (7).

9. The method of claim 8, further comprising:
displaying a plurality of schedule director (39a, 39b, 39c) on the first time line (37), wherein the plurality of schedule director (39a, 39b, 39c) represent individual schedule items.

10. The method of claim 9, wherein the touch panel includes a pressure sensor, and wherein the scrolling speed is varied according to a pressure change of a user input being input through the touch panel.

11. The method of claim 9, wherein the scrolling speed is varied according to at least one of a strength, a moving distance and a duration of the scrolling start signal.
